# EUROPÄISCHE PATENTSCHRIFT

(11) **EP 1 461 786 B1**
(45) Veröffentlichungstag und Bekanntmachung des Hinweises auf die Patenterteilung: **21.11.2007**
(21) Anmeldenummer: 02779122.7
(22) Anmeldetag: 23.09.2002
(51) Int. Cl.: G08B 3/10, G08B 29/02

(54) **VORRICHTUNG ZUR ERKENNUNG EINES UNZULÄSSIGEN BETRIEBSZUSTANDES**
DEVICE FOR DETECTING AN INADMISSIBLE OPERATING STATE
DISPOSITIF POUR DETECTER UN ETAT DE FONCTIONNEMENT INADMISSIBLE

(30) Priorität: 24.11.2001 DE 10157735
(43) Veröffentlichungstag der Anmeldung: 29.09.2004
(73) Patentinhaber: ROBERT BOSCH GMBH, 70442 Stuttgart (DE)
(72) Erfinder: MAHLER, Achim, 77694 Kehl (DE); OTT, Herbert, 71277 Rutesheim (DE)
(86) Internationale Anmeldenummer: PCT/DE2002/003599
(87) Internationale Veröffentlichungsnummer: WO 2003/046854

(56) Entgegenhaltungen:
- EP-A- 0 402 928
- DE-A- 4 338 462
- US-A- 3 987 393
- US-A- 5 895 989

## Beschreibung

### Stand der Technik

Die Erfindung geht aus von einer Vorrichtung zur Erkennung eines unzulässigen Betriebszustandes nach der Gattung des unabhängigen Anspruchs. Aus der WO 95/16248 ist bereits eine Sireneneinheit für ein Kraftfahrzeug bekannt, die von der Fahrzeugbatterie gespeist wird. Um die Funktionsfähigkeit der Sirene auch bei einer Unterbrechung des Anschlusses der Fahrzeugbatterie zu gewährleisten, wird eine Hilfsbatterie verwendet. Bei einer Unterbrechung der Batteriespannungsversorgung wird die Sirene aktiviert. Auch bei einer Unterbrechung der Kommunikation zwischen Sirene und Alarmanlagensteuergerät nimmt die Sirene einen Alarmzustand ein.

US5895989 offenbart eine Vorrichtung wobei die Verschlechterung oder Unterbrechung der Spannungsversorgung für eine Last zu einem Warnsignal auf einem Bildschirm führt.

Es ist Aufgabe der vorliegenden Erfindung, die Sicherheit bei der Erkennung von Manipulationsversuchen weiter zu erhöhen. Diese Aufgabe wird durch die Merkmale des unabhängigen Anspruchs gelöst.

### Vorteile der Erfindung

Die Vorrichtung zur Erkennung eines unzulässigen Betriebszustandes weist Erfassungsmittel zur Erfassung einer Versorgungsspannung auf. Auswertemittel werten den Verlauf der Versorgungsspannung aus und erkennen anhand von Spannungsänderungen der Versorgungsspannung einen unzulässigen Betriebszustand und lösen einen Alarm aus. Weiterhin erfassen die Auswertemittel eine Information über einen Betriebszustand zumindest einer von der Versorgungsspannung gespeisten elektrischen Last. In Abhängigkeit von dieser Information lösen die Auswertemittel den Alarm aus. Somit wird zur Alarmauslösung ein weiteres Plausibilitätskriterium herangezogen, nämlich der Betriebszustand der durch die Versorgungsspannung gespeisten Last. Hierbei kann es sich um die Beleuchtungseinrichtung, eine Standheizung etc. eines Kraftfahrzeugs handeln. Detektieren nun die Auswertemittel, dass die Versorgungsspannung einbricht, so könnte dies auf auf einen unzulässigen Betriebszustand und möglicherweise auf eine Alarmsituation hindeuten. So könnte sich beispielsweise ein Unberechtigter an dem Kraftfahrzeug zu schaffen machen, indem er mit Hilfe eines elektrischen Verbrauchers die Fahrzeugbatterie entladen möchte, um so das Alarmsystem außer Kraft zu setzen. In einer solchen Situation muss ein Alarm ausgelöst werden. Andererseits könnte jedoch der Benutzer beispielsweise ferngesteuert die Standheizung des Kraftfahrzeugs aktivieren, was unter Umständen zu einem Spannungseinbruch der Versorgungsspannung führt. Diese Aktion geht dagegen auf einen berechtigten Benutzer zurück, so dass eine Alarmauslösung unterbleiben soll. Um Fehlauslösungen zu verhindern, erfolgt erfindungsgemäß eine Plausibilitätsüberprüfung, indem die Auswertemittel eine Information über den Betriebszustand zumindest einer von der Versorgungsspannung gespeisten elektrischen Last erfassen und in Abhängigkeit von dieser Information den Alarm auslösen. So erhalten die Auswertemittel beispielsweise in letzterem Fall die Information, dass die Standheizung aktiviert wurde. Dann führt der Spannungseinbruch der Versorgungsspannung nicht zu einem Auslösen des Alarms.

Sollte jedoch den Auswertemitteln keine Information über einen aktivierten elektrischen Verbraucher vorliegen, so deutet dies auf unberechtigte Manipulationsversuche hin. Die Auswertemittel generieren einen Alarm. Neben der Erhöhung der Sicherheit werden auch Fehlauslösungen des Alarmsystems vermieden.

In einer zweckmäßigen Weiterbildung vergleichen die Auswertemittel die Batteriespannung mit einer Grenzspannung. Überschreitet die Batterie diese Grenzspannung, so deutet dies auf eine leere Batterie hin. In diesem Fall soll eine Alarmauslösung unterbleiben. Wiederum werden Fehlauslösungen vermieden.

In einer zweckmäßigen Weiterbildung wird die Versorgungsspannung mit dem Wert Null verglichen. Erreicht die Versorgungsspannung diesen Wert, so wird sofort ein Alarm generiert, da die Energieversorgung vermutlich aus Manipulationsgründen unterbrochen wurde. Dadurch erhöht sich die Sicherheit gegen Diebstahl.

In einer zweckmäßigen Weiterbildung wird bei Unterschreiten einer ersten Spannung ein Timer gestartet. Unterschreitet die Versorgungsspannung mit Starten des Timers innerhalb einer bestimmten Zeitdauer auch eine zweite Spannung, so wird ein Alarm ausgelöst. Somit führen einerseits kurzzeitige Spannungseinbrüche, die innerhalb der zugestandenen Zeitspanne liegen, noch nicht zum Auslösen eines Alarms. Andererseits kann bei einer geeigneten Wahl der Zeitspanne ein Manipulationsversuch sicher detektiert werden.

In einer zweckmäßigen Weiterbildung wird der Verlauf der Versorgungsspannung hinsichtlich eines Spannungssprunges und/oder eines Spannungsknicks ausgewertet. Hierbei kann auch die Gesamteinschaltdauer (Dauer des Spannungseinbruchs) erfasst und als Kriterium für die Alarmauslösung herangezogen werden. Dauert der Spannungseinbruch beispielsweise länger als eine kritische Zeitspanne, so wird der Alarm bei einer unbekannten Last ausgelöst. Alternativ könnte ebenfalls vorgesehen sein, die Summe der Einschaltzeiten mit einer kritischen Zeitspanne zu vergleichen. Wird diese Zeitspanne überschritten, wird ein Alarm ausgelöst. Dadurch werden auch mehrere Manipulationsversuche berücksichtigt.

In einer zweckmäßigen Weiterbildung ist vorgesehen, dass eine Auswertung der Versorgungsspannung mit Blick auf einen Spannungsknick nur dann erfolgt, wenn sich die Versorgungsspannung im eingeschwungenen Zustand befindet. Dann führen Spannungsänderungen, die aus vorherigen starken Belastungen oder aus vorherigem Laden der Fahrzeugbatterie resultieren, nicht zu einer Fehlauslösung.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung ist in der Figur dargestellt und wird nachfolgenden näher beschrieben.

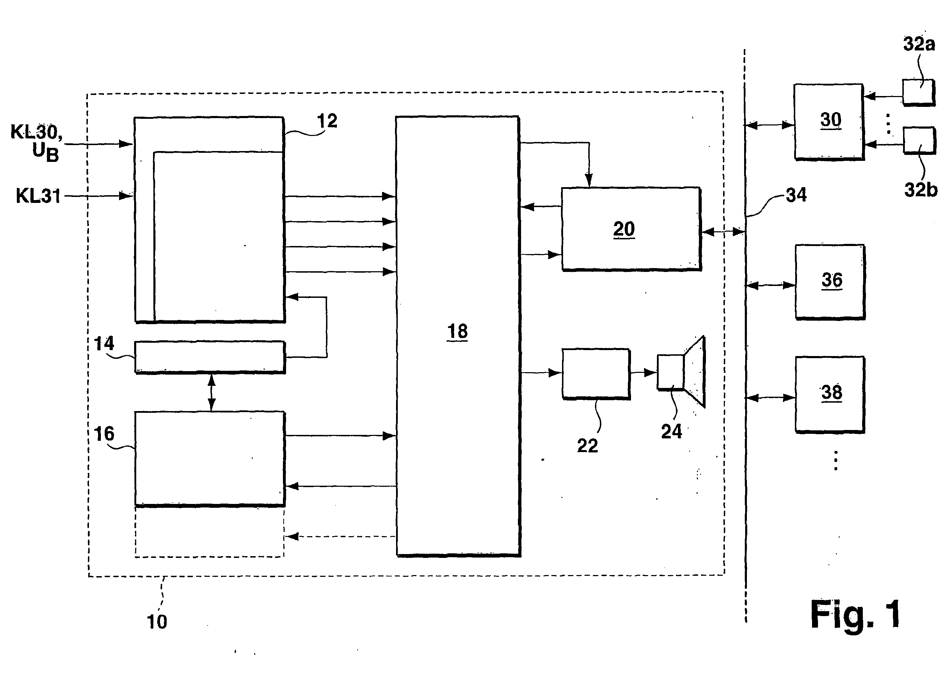

Es zeigen
Figur 1 ein Blockschaltbild der Vorrichtung zur Erkennung eines unzulässigen Betriebszustandes,
Figur 2a-2e unterschiedliche zeitabhängige Spannungsverläufe der Versorgungsspannung und
Figur 3 ein Flussdiagramm zur Erkennung eines unzulässigen Betriebszustandes.

### Beschreibung des Ausführungsbeispiels

Einer Versorgungseinheit 12 werden eine Versorgungsspannung U_{B} (Klemme 30) und ein Bezugspotenzial (Klemme 31) zugeführt. Die Versorgungseinheit 12 enthält einen Verpolschutz, eine Spannungserfassung für die Versorgungsspannung U_{B}, einen Spannungsregler sowie eine Batterieumschaltung, um bei einer Unterbrechung der Versorgungsspannung U_{B} die Sirene 10 mit der Hilfsbatterie 14 zu speisen. Die Hilfsbatterie 14 wird von einer Hilfsbatterperipherie 16 überwacht und gegebenenfalls geladen. Die Versorgungeinheit 12 stellt die Versorgungsspannung U_{B}, die interne Versorgungsspannung V_{CC}, einen Resetbefehl sowie eine Information über die Hilfsbatterie 14 einem Mikrocontroller 18 zur Verfügung. Der Mikrocontroller 18 gibt ein Testsignal und gegebenenfalls ein Aktivierungssignal für das Laden der Hilfsbatterie 14 an die Hilfsbatterieperipherie 16 ab. Weiterhin überwacht der Mikrocontroller 18 den Ladezustand bzw. die vorhandene Restkapazität der Hilfsbatterie 14. Der Mikrocontroller 18 tauscht außerdem Daten aus mit einem Bustreiber 20, welcher über den Mikrocontroller 18 aktiviert werden kann. Der Mikrocontroller steuert im Alarmfall einen Piezotreiber 22 als Teil eines Alarmtongebers 24 an. Über den Bustreiber 20 und ein Bussystem 34 tauscht der Mikrocontroller Daten aus mit einem Alarmanlagensteuergerät 30. Dem Alarmanlagensteuergerät 30 sind Ausgangssignale von Überwachungssensoren 32a, 32b zugeführt. An das Bussystem 34 sind weiterhin als Beispiele für elektrische Verbraucher eine Beleuchtung 36 sowie eine Standheizung 38 angeschlossen, die durch die Versorgungsspannung U_{B} gespeist werden. Über das Bussystem 34 geben die elektrischen Verbraucher 36, 38 Informationen über ihre Betriebszustände entweder an das Alarmanlagensteuergerät 30 oder direkt an den Mikrocontroller 18 ab.

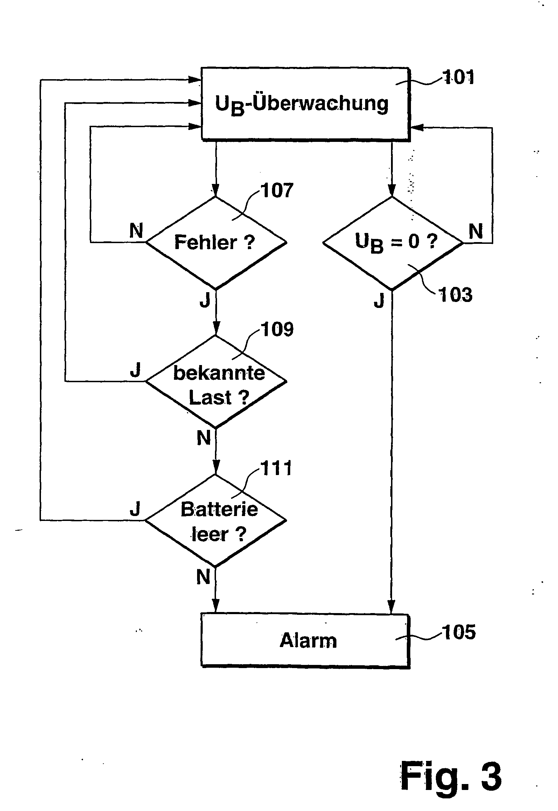

Der Mikrocontroller 18 wertet den Verlauf der Versorgungsspannung U_{B} aus, ob ein unzulässiger Betriebszustand erreicht wurde, der auf Manipulationsversuche an einem Kraftfahrzeug schließen lässt. Bei einem Kraftfahrzeug wird die elektrische Energie beziehungsweise die Versorgungsspannung U_{B} durch eine Batterie bereitgestellt. Somit müssen bei einer Auswertung des Verlaufs der Versorgungsspannung U_{B} batteriespezifische Betriebszustände berücksichtigt werden. Im normalen Betriebszustand jedoch erhält die Sirene 10 von dem Alarmanlagensteuergerät 30 einen Aktivierungsbefehl, wenn anhand der eingehenden Signale der Überwachungssensoren 32a, 32b ein unberechtigtes Eindringen in den Kraftfahrzeuginnenraum detektiert wurde. Der entsprechende Aktivierungsbefehl des Alarmanlagensteuergeräts 30 gelangt über das Bussystem 34 und den Bustreiber 20 an den Mikrocontroller 18, der daraufhin den Piezotreiber 22 derart ansteuert, dass der Alarmtongeber 24 ein Warnsignal abgibt. Die Überwachung der Versorgungsspannung U_{B} soll nun dazu dienen, dass Manipulationsversuche, die die Funktionsfähigkeit der Sirene 10 beeinträchtigen, ebenfalls zu einem Alarm führen. Hierzu wertet der Mikrocontroller 18 den Verlauf der Versorgungsspannung U_{B}, von der Versorgungseinheit 12 erfasst und an den Mikrocontroller 18 weitergeleitet, aus. Nimmt die Versorgungsspannung U_{B} den Wert Null an, das heißt, wurde die Versorgungsleitung zu der Sirene 10 gekappt beziehungsweise unterbrochen, so generiert der Mikrocontroller 18 sofort ein Alarmsignal. Die Energieversorgung wird in diesem Fall sofort von der Hilfsbatterie 14 übernommen, was die Versorgungeinheit 20 anhand der Batterieumschaltung bewirkt. Diese Situation ist in dem Flussdiagramm gemäß Figur 3 in Schritten 101, 103 und 105 dargestellt.

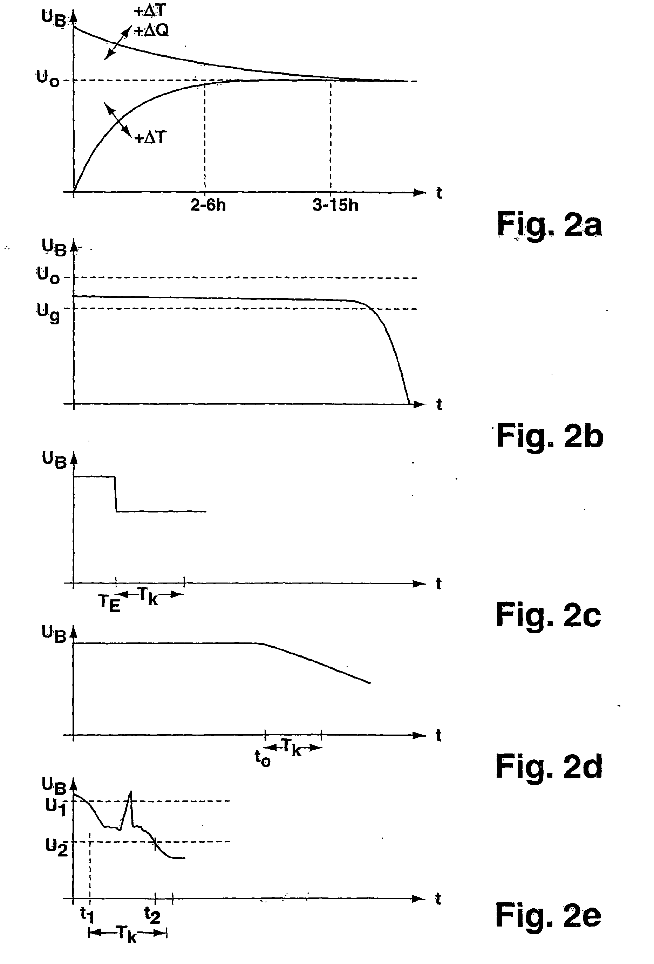

Es werden jedoch noch weitere, kritische Betriebszustände der Versorgungsspannung U_{B} in Schritt 101 ausgewertet. Als kritischer Betriebszustand wird beispielsweise ein Spannungssprung, wie in Figur 2c dargestellt, detektiert. Zum Zeitpunkt te bricht die Versorgungsspannung U_{B} auf einen niedrigeren Wert ein. Dieser Spannungseinbruch kann auf einen Manipulationsversuch hindeuten. So könnte beispielsweise ein Unberechtigter durch Zuschalten einer externen Last versuchen, die Fahrzeugbatterie langsam zu entladen. Unter Umständen würde bei einer langsamen Entladung das Überwachungskonzept der Sirene 10 nicht ansprechen, so dass ein Einbruchversuch bei leerer Fahrzeugbatterie nicht zu einem Auslösen der Sirene führen würde. Dies wird nun durch die Detektion und weitere Auswertung eines Spannungssprungs verhindert. Ein Spannungseinbruch gilt als Fehler im Sinne der Abfrage 107. In der darauffolgenden Abfrage 109 ermittelt der Mikrocontroller 18 als mögliches Auswertemittel, ob eine bekannte Last 36, 38 aktiviert wurde. Hierzu wertet der Mikrocontroller 18 eine Information über den Betriebszustand der elektrischen Lasten 36, 38 aus, die beispielsweise das Alarmanlagensteuergerät 30 über das Bussystem 34 an den Mikrocontroller 18 sendet. Lässt sich der Information über den Betriebszustand beispielsweise entnehmen, dass zum Zeitpunkt te die Standheizung 38 aktiviert wurde, so handelt es sich um eine bekannte Last. Ein Spannungseinbruch geht vermutlich auf das Zuschalten der Standheizung 38 zurück, nicht dagegen auf ein Zuschalten einer externen, das heißt unbekannten und nicht im Fahrzeug angeordneten Last. Weil es sich nun in dem Beispielsfall um eine bekannte Last handelt, wird kein Alarm ausgelöst und die Versorgungsspannungsüberwachung gemäß Schritt 101 weiter durchgeführt.

Ergibt sich in Abfrage 109 jedoch, dass keine Information über den Betriebszustand vorliegt, die auf eine aktivierte, bekannte elektrische Last hindeutet, so handelt es sich um eine unbekannte Last. In diesem Fall schließt sich Schritt 111 an. Ein Spannungseinbruch könnte nun auch darauf zurückgeführt werden, dass inzwischen die Batterie leer ist. Das entsprechende charakteristische Verhalten lässt sich der Figur 2b entnehmen. So bricht eine entladene Batterie unter Belastung nach Unterschreitung der Grenzspannung U_{G}, die beispielsweise zwischen 10,5V und 11,4V liegt, ein. Somit lässt sich anhand der Grenzspannung U_{G} detektieren, ob der Ladezustand der Batterie nahezu 0% ist. Sollte dies der Fall sein, so wird kein Alarm ausgelöst. In diesem Fall schließt sich wiederum die Versorgungsspannungsüberwachung gemäß Schritt 101 an. Ist die Batterie jedoch nicht entladen, so wird der Alarm nun endgültig ausgelöst, Schritt 105.

Bei einer Auswertung des Spannungssprungs der Versorgungsspannung U_{B} kann die Gesamteinschaltdauer der unbekannten Last als Alarmauslösekriterium herangezogen werden. So wird beispielsweise mit Beginn des Spannungseinbruchs zum Zeitpunkt te mit einer Alarmauslösung solange gewartet, bis eine vorbestimmte Zeitspanne Tk abgelaufen ist. Sollte die Versorgungsspannung U_{B} innerhalb dieser kritischen Zeitspanne Tk auf dem niedrigeren Spannungsniveau verharren, wird nach Ablauf der kritischen Zeitspanne Tk der Alarm ausgelöst, sofern es sich um eine unbekannte Last handelt.

Ein weiteres, parallel ablaufendes Überwachungskonzept ist in Figur 2e dargestellt. Unterschreitet die Versorgungsspannung U_{B} eine erste Spannung U₁, so wird ein Alarm nur dann ausgelöst, wenn die Versorgungsspannung U_{B} eine betragsmäßig kleinere, zweite Spannung U₂ innerhalb der kritischen Zeitspanne Tk unterschreitet. In dem in Figur 2e dargestellten Beispielfall unterschreitet die Versorgungsspannung U_{B} die zweite Spannung U₂ zum Zeitpunkt t2. Da die Zeitspanne zwischen dem ersten Zeitpunkt t1, zu welchem die erste Spannung U₁ unterschritten wurde, und dem zweiten Zeitpunkt t2 kleiner ist als die kritische Zeitspanne Tk, so wird in Abfrage 107 auf einen Fehler erkannt.

In einem weiteren, zusätzlich ablaufenden Überwachungskonzept wird ein möglicher Spannungsknick der Versorgungsspannung U_{B} ausgewertet. Zuerst wird der eingeschwungene Zustand der Versorgungsspannung U_{B} gesucht. Der Figur 2a lässt sich entnehmen, dass gemäß der oberen Kurve die Versorgungsspannung U_{B} nach einem vorherigen Laden sich erst nach einer Zeit zwischen drei bis fünfzehn Stunden auf den Ruhewert U₀ eingeschwungen hat. Die untere Kurve zeigt den Verlauf der Versorgungsspannung U_{B} bei vorheriger starker Belastung. In diesem Fall wird die Ruhespannung U₀ erfahrungsgemäß erst zwischen zwei und sechs Stunden erreicht. Der eingeschwungene Zustand stellt sich somit innerhalb von zwei bis fünfzehn Stunden ein. Die Gradientenüberwachung wird erst bei Erreichen des eingeschwungenen Zustand gestartet. Beginnend mit dem Auswertezeitpunkt der Gradientenüberwachung wird nun eine Spannungsänderung der Versorgungsspannung U_{B} als Fehlerkriterium im Sinne der Abfrage 107 herangezogen. Hält die Spannungsänderung über eine kritische Zeitspanne Tk hinweg an, ist ein fehlerhafter Zustand aufgetreten, vergleiche die Figur 2d. Das stetige Absinken der Versorgungsspannung U_{B} könnte beispielsweise durch Zuschalten eines kleinen exteren elektrischen Verbrauchers in unberechtigter Weise hervorgerufen werden. In diesem Fall müsste ein Alarm ausgelöst werden. Zuvor wird jedoch in der Abfrage 109 detektiert, ob die Information über einen Betriebszustand der elektrischen Last besagt, dass eine bekannte Last aktiviert ist. Beispielsweise könnte die Beleuchtung 36 aktiviert sein, wenn beispielsweise der Benutzer vergessen hat, das Licht auszuschalten. Handelt es sich somit um eine bekannte Last, wird kein Alarm ausgelöst und die Versorgungsspannungsüberwachung gemäß Schritt 101 fortgesetzt. Bei einer unbekannten Last jedoch folgt eine Alarmauslösung gemäß Schritt 105, sofern die Batterie nicht leer ist.

Als zusätzliches Kriterium für eine Alarmauslösung dient die Überwachung der Kommunikationsverbindung mit dem Bussystem 34. Wird die Kommunikation mit dem Alarmanlagensteuergerät 30 unterbunden, so aktiviert sich die Sirene 10.

Die Versorgungsspannungsüberwachung 101 ist grundsätzlich aktiv, wenn sich die Alarmanlage des Fahrzeugs im geschärften Zustand befindet. Das Schärfen erfolgt beispielsweise mit Verlassen beziehungsweise Verriegeln des Kraftfahrzeugs.

Die Auswertung der Versorgungsspannung U_{B} könnte softwaremäßig beispielsweise in Verbindung mit dem Mikrocontroller 18 erfolgen. Gleichermaßen wäre jedoch auch eine Hardwareschaltung denkbar. Auf die grundsätzliche Funktionsweise des Überwachungskonzepts hat dies jedoch keinen Einfluss.

Die Erfindung findet bevorzugte Verwendung bei Alarmanlagen für Kraftfahrzeuge. Sie ist jedoch hierauf nicht eingeschränkt. Auch der Einsatz für Gebäude etc. ist denkbar.

## Patentansprüche

1. Vorrichtung zur Erkennung eines unzulässigen Betriebszustandes, die folgendes umfasst: Erfassungsmittel (12), die den Verlauf einer Versorgungsspannung (U_{B}) erfassen, Auswertemittel (18), die den Verlauf der Versorgungsspannung (U_{B}) auswerten und anhand einer Spannungsänderung der Versorgungsspannung (U_{B}) einen unzulässigen Betriebszustand erkennen und einen Alarm auslösen, **dadurch gekennzeichnet, dass** die Auswertemitteln (18) zumindest eine Information über einen Betriebszustand einer von der Versorgungsspannung (U_{B}) gespeisten elektrischen Last (36, 38) erhalten und in Abhängigkeit von dieser Information den Alarm auslösen.

2. Vorrichtung nach Anspruch 1, **dadurch gekennzeichnet, dass** ein Alarm ausgelöst wird bei einem Spannungssprung der Versorgungsspannung (U_{B}).

3. Vorrichtung nach einem der vorhergehenden Ansprüche, **dadurch gekennzeichnet, dass** ein Alarm ausgelöst wird bei einem Spannungsknick der Versorgungsspannung (U_{B}).

4. Vorrichtung nach einem der vorhergehenden Ansprüche, **dadurch gekennzeichnet, dass** ein Alarm nur dann ausgelöst wird, wenn der Spannungssprung und/oder der Spannungsknick für eine bestimmte Zeitspanne (Tk) andauert.

5. Vorrichtung nach einem der vorhergehenden Ansprüche, **dadurch gekennzeichnet, dass** die Überwachung auf einen Spannungsknick der Versorgungsspannung (U_{B}) nur dann erfolgt, wenn die Versorgungsspannung (U_{B}) sich in einem eingeschwungenen Zustand befindet.

6. Vorrichtung nach einem der vorhergehenden Ansprüche, **dadurch gekennzeichnet, dass** ein Alarm ausgelöst wird, wenn die Versorgungsspannung (U_{B}) eine erste Spannung (U₁) und innerhalb einer Zeitspanne (Tk) auch eine zweite Spannung (U₂) unterschreitet.

7. Vorrichtung nach einem der vorhergehenden Ansprüche, **dadurch gekennzeichnet, dass** kein Alarm ausgelöst wird, wenn die Information über den Betriebszustand eine aktivierte Last (36, 38) anzeigt.

8. Vorrichtung nach einem der vorhergehenden Ansprüche, **dadurch gekennzeichnet, dass** ein Alarm ausgelöst wird, wenn die Information über den Betriebszustand keine aktivierte Last (36, 38) anzeigt.

9. Vorrichtung nach einem der vorhergehenden Ansprüche, **dadurch gekennzeichnet, dass** die Information über den Betriebszustand über ein Bussystem (34) an die Auswertemittel (18) gelangt.

## Claims

1. Apparatus for identifying an unacceptable operating state, which comprises the following:
detection means (12) which detect the profile of a supply voltage (U_{B}), evaluation means (18), which evaluate the profile of the supply voltage (U_{B}) and use any voltage change in the supply voltage (U_{B}) to identify an unacceptable operating state and to trigger an alarm, **characterized in that** the evaluation means (18) receive at least one information item about one operating state of an electrical load (36, 38) which has been fed from the supply voltage (U_{B}), and trigger the alarm as a function of this information.

2. Apparatus according to Claim 1, **characterized in that** an alarm is triggered in the event of a sudden voltage change in the supply voltage (U_{B}).

3. Apparatus according to one of the preceding claims, **characterized in that** an alarm is triggered in the event of a voltage kink in the supply voltage (U_{B}).

4. Apparatus according to one of the preceding claims, **characterized in that** an alarm is triggered only when the sudden voltage change and/or the voltage kink last for a specific time interval (Tk).

5. Apparatus according to one of the preceding claims, **characterized in that** monitoring for a voltage kink in the supply voltage (U_{B}) is carried out only when the supply voltage (U_{B}) is in a steady state.

6. Apparatus according to one of the preceding claims, **characterized in that** an alarm is triggered when the supply voltage (U_{B}) falls below a first voltage (U₁) as well as below a second voltage (U₂) within a time interval (Tk)..

7. Apparatus according to one of the preceding claims, **characterized in that** no alarm is triggered if the information about the operating state indicates an activated load (36, 38).

8. Apparatus according to one of the preceding claims, **characterized in that** an alarm is triggered if the information about the operating state indicates no activated load (36, 38).

9. Apparatus according to one of the preceding claims, **characterized in that** the information about the operating state is passed via a bus system (34) to the evaluation means (18).

## Revendications

1. Dispositif pour détecter un état de fonctionnement inadmissible comprenant les moyens suivants:
- des moyens de saisie (12) pour saisir l'évolution d'une tension d'alimentation (U_{B}),
- des moyens d'exploitation (18) pour exploiter l'évolution de la tension d'alimentation (U_{B}), pour reconnaître un état de fonctionnement inadmissible, à l'aide d'une variation de tension d'alimentation (U_{B}), et déclencher une alarme
**caractérisé en ce que**
les moyens d'exploitation (18) reçoivent au moins une information concernant un état de fonctionnement d'une charge électrique (36, 36) alimentée par la tension d'alimentation (U_{B}) et ils déclenchent l'alarme en fonction de cette information.

2. Dispositif selon la revendication 1,
**caractérisé en ce qu'**
il déclenche une alarme pour une variation de tension d'alimentation (U_{B}).

3. Dispositif selon l'une quelconque des revendications précédentes,
**caractérisé en ce qu'**
il déclenche l'alarme pour une variation brusque de la courbe de tension d'alimentation (U_{B}).

4. Dispositif selon l'une quelconque des revendications précédentes,
**caractérisé en ce qu'**
il déclenche une alarme seulement si la variation de tension et/ou le coude de la courbe de tension se prolongent pendant une durée déterminée (Tk).

5. Dispositif selon l'une quelconque des revendications précédentes,
**caractérisé en ce qu'**
on surveille le coude de la courbe de tension d'alimentation (U_{B}) seulement si cette tension d'alimentation (U_{B}) est à l'état stabilisée.

6. Dispositif selon l'une quelconque des revendications précédentes,
**caractérisé en ce qu'**
on déclenche une alarme si la tension d'alimentation (U_{B}) passe en dessous d'une première tension (U₁) et aussi sous une seconde tension (U₂) à l'intérieur d'une période (Tk).

7. Dispositif selon l'une quelconque des revendications précédentes,
**caractérisé en ce qu'**
aucune alarme n'est déclenchée si l'information concernant l'état de fonctionnement affiche une charge activée (36, 38).

8. Dispositif selon l'une des revendications précédentes,
**caractérisé en ce qu'**
on déclenche une alarme si l'information concernant l'état de fonctionnement n'indique aucune charge activée (36, 38).

9. Dispositif selon l'une quelconque des revendications précédentes,
**caractérisé en ce que**
l'information concernant l'état de fonctionnement est appliquée aux moyens d'exploitation (18) par un système de bus (34). '
